# EUROPÄISCHE PATENTSCHRIFT

(11) **EP 2 285 551 B1**
(45) Veröffentlichungstag und Bekanntmachung des Hinweises auf die Patenterteilung: **01.10.2014**
(21) Anmeldenummer: 09778897.0
(22) Anmeldetag: 30.11.2009
(51) Int. Cl.: B29C 67/00, B22F 3/105

(54) **SELEKTIVES LASERSINTERVERFAHREN ZUR HERSTELLUNG EINES OBJEKTS**
METHOD OF SELECTIVE LASER SINTERING FOR PRODUCING AN OBJECT
PROCÉDÉ DE FABRICATION D'UN OBJET PAR FRITTAGE LASER SÉLECTIF

(30) Priorität: 02.12.2008 DE 102008060046
(43) Veröffentlichungstag der Anmeldung: 23.02.2011
(73) Patentinhaber: EOS GmbH Electro Optical Systems, 82152 Krailling (DE)
(72) Erfinder: MATTES, Thomas, 82205 Gilching (DE); HÜMMELER, Ludger, 57368 Lennestadt (DE); FROHNMAIER, Markus, 81379 München (DE)
(74) Vertreter: Prüfer & Partner GbR European Patent Attorneys
(86) Internationale Anmeldenummer: PCT/EP2009/008525
(87) Internationale Veröffentlichungsnummer: WO 2010/063439

(56) Entgegenhaltungen:
- EP-A2- 1 700 686
- EP-A2- 1 938 952
- WO-A1-03/058505
- DE-A1-102007 006 478
- Thomas MATTES: "EOS International User Meeting 2008 - Product News Polymere Laser-Sintering"[Online] 15. April 2008 (2008-04-15), Seiten 1-36, XP002590006 EOS Gefunden im Internet: URL:http://www.detekt.com.tw/pdf/%E6%87%89 %E7%94%A8%E6%8E%A8%E5%BB%A3/%E5%A1%91%E8%8 6%A0%E6%87%89%E7%94%A8/Product%20News%20Po lymere%20Laser-Sintering.pdf> [gefunden am 2010-06-30]

## Beschreibung

Die vorliegende Erfindung bezieht sich auf ein selektives Lasersinterverfahren.

Im Bereich der schichtaufbauenden Verfahren, insbesondere beim Laser-Sintern, ist die Qualität des erzeugten Objekts von der Qualität und den Eigenschaften des verwendeten Pulvers abhängig. Die Eigenschaften des verwendeten Pulvers sind oft nicht ausreichend bekannt, da die Zusammensetzung des Pulvers durch die Zumischung von bereits in früheren Herstellungsprozessen verwendetem Pulver, sogenanntem Altpulver, meist nicht bekannt ist.

Zur Bestimmung der Pulvereigenschaften wird beispielsweise die sogenannte Melt Volume Rate Methode (MVR) verwendet, bei der eine Pulverschmelze erzeugt wird und die Viskosität der Pulverschmelze bestimmt wird, die Aufschluss über das Alter des Pulvers geben kann. Ferner kann die Schmelztemperatur bestimmt werden. Diese Methode ist jedoch zeitaufwändig und nicht in allen Fällen geeignet.

Aus der DE 10 2006 023 484 sind Vorrichtungen und Verfahren bekannt, mittels derer die Qualität von durch Lasersintern herzustellender Objekte, bei denen eine Mischung aus Neu- und Altpulver verwendet wird, verbessert werden kann.

Thomas MATTES: "EOS International User Meeting 2008 - Product News Polymere Laser-Sintering" vom 15. April 2008 offenbart auf Seiten 1-36 ein gattungsgemäßes selektives Lasersinterverfahren zur Herstellung eines dreidimensionalen Objekts, bei dem ein Objekt durch selektives Verfestigen von Schichten eines pulverförmigen Materials an den dem Querschnitt des Objekts in der jeweiligen Schicht entsprechenden Stellen gebildet wird, mit den folgenden Schritten: Bereitstellen einer Materialmenge, die durch den Schmelzflussindex gekennzeichnet ist; Erfassen von Daten, die sich auf den Schmelzflussindex beziehen; und Speichern der Daten, die sich auf den Schmelzflussindex beziehen.

EP 1 938 952 A2 zeigt eine Kartuschenvorrichtung zum Bereitstellen einer Materialmenge für ein 3-D Drucksystem, wobei die Kartusche eine Datenspeichervorrichtung zum Speichern von Daten aufweist, die sich auf das Material beziehen, welches sich in der Kartusche befindet.

Es ist die Aufgabe der vorliegenden Erfindung, ein selektives Lasersinterverfahren zum Herstellen eines dreidimensionalen Objekts bereitzustellen, mit dem die Qualität der hergestellten Objekte nachvollziehbar dokumentiert und damit weiter verbessert wird. Diese Aufgabe wird durch das Verfahren mit den Merkmalen des Anspruchs 1 gelöst. Vorteilhafte Weiterbildungen der vorliegenden Erfindung ergeben sich aus den abhängigen Ansprüchen.

Ein Vorteil des erfindungsgemäßen Verfahrens besteht darin, dass jederzeit bekannt ist, welche Pulverbestandteile für ein hergestelltes Objekt verwendet wurden. Zum Beispiel sind die prozentualen Anteile von Neu- und Altpulver, sowie die verbaute Menge von Gesamtpulver bekannt (sämtliche Daten können durch das IQMS (Integrated Quality Management System) zentral verwaltet werden). Das verwendete Pulver und die daraus gebauten Objekte können in einer Art Stammbaum bis zur Herstellung zurückverfolgt werden.

Die Zusammensetzung jeder einzelnen Schicht kann bestimmt werden. Die Qualität eines hergestellten Objekts ist somit nachweisbar. Durch eine derartig durchführbare Qualitätskontrolle der hergestellten Objekte kann eine entsprechende Zertifizierung (QMS) vergeben werden. Es ist ferner möglich, die Bauparameter der Lasersintermaschine zu den Eigenschaften des verwendeten Pulvers in Beziehung zu bringen. Ferner kann die Lasersintermaschine in Abhängigkeit des verwendeten Pulvers kalibriert werden.

Ein weiterer Vorteil ist es, dass eine Reproduzierbarkeit von herzustellenden Objekten gewährleistet ist, da sämtliche hierfür notwenigen Parameter bekannt sind. Dies wird von vielen produzierenden Unternehmen, beispielsweise solchen in der Flugzeugindustrie, gefordert, da aus Sicherheitsgründen besonders strenge Vorschriften zu beachten sind.

Ein weiterer Vorteil ist es, dass Servicekräfte und Kunden durch die dokumentierten Daten einen Einblick bzgl. der Zuverlässigkeit und der Auslastung der Maschinen erhalten. Der Zustand der Maschine, deren Parameter und Unregelmäßigkeiten bzw. Fehler, die während eines schichtaufbauenden Verfahrens auftreten können, sind zurückverfolgbar. Auftretende Probleme können auf diese Weise schnell und kosteneffizient gelöst werden.

Weitere Merkmale und Zweckmäßigkeiten der Erfindung ergeben sich aus der Beschreibung von Ausführungsbeispielen anhand der beigefügten Figuren. Von den Figuren zeigen:
- Fig. 1: eine schematische Ansicht einer Lasersintervorrichtung,
- Fig. 2: eine schematische Ansicht eines Systems zur Bereitstellung einer Pulvermenge gemäß der Erfindung,
- Fig. 3: eine schematische Ansicht des erfindungsgemäßen Verfahrens mit den Verfahrensschritten "Abkühlen", "Auspacken", "Sammeln", "Mischen", "Herstellen",
- Fig. 4: ein Beispiel eines Materialfluss-Diagramms.

Im folgenden wird mit Bezug auf die Figuren zunächst eine erste Ausführungsform des Lasersinterverfahrens beschrieben.

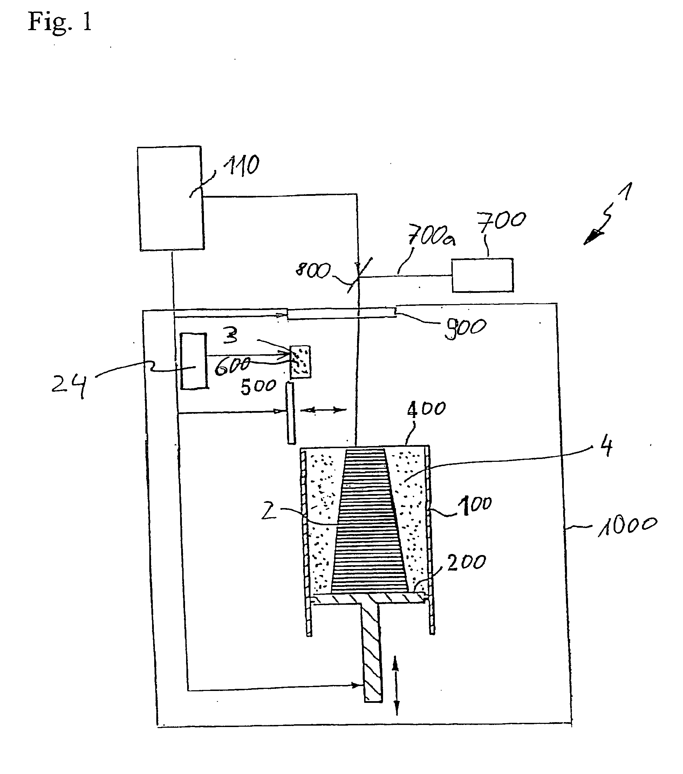

Die in Fig. 1 dargestellte Lasersintervorrichtung 1 weist einen nach oben hin offenen Baubehälter 100 mit einem darin in vertikaler Richtung bewegbaren Träger 200 auf, der das zu bildende Objekt 2 trägt und ein Baufeld definiert. Der Träger 200 wird in vertikaler Richtung so eingestellt, dass die jeweils zu verfestigende Schicht des Objekts 2 in einer Arbeitsebene 400 liegt. Weiterhin ist ein Beschichter 500 zum Aufbringen eines durch elektromagnetische Strahlung verfestigbaren Pulvers 3 vorgesehen. Das Pulver 3 wird aus einem Vorratsbehälter 24 einem Beschichter 500 über eine Dosiervorrichtung 600 in einer bestimmten Menge zugeführt. Es ist ferner ein Laser 700 vorgesehen, der einen Laserstrahl 700a erzeugt, der durch eine Ablenkeinrichtung 800 auf ein Einkoppelfenster 900 gelenkt und von diesem in die Prozesskammer 1000 hindurch gelassen und in einem vorbestimmten Punkt in der Arbeitsebene 400 fokussiert wird. Es ist ferner eine Steuereinheit 110 vorgesehen, über die die Bestandteile der Vorrichtung in koordinierter Weise zum Durchführen des Bauprozesses gesteuert werden.

Zur Herstellung des Objekts 2 wird das Pulver 3 durch den Beschichter 500 schichtweise auf die Arbeitsebene 400 aufgetragen. Der Laserstrahl 700a verfestigt das Pulver 3 selektiv an den, dem Querschnitt des Objekts 2 in der jeweiligen Schicht entsprechenden Stellen. Danach wird der bewegbare Träger 200 abgesenkt und die nächste Schicht Pulver 3 wird durch den Beschichter 500 auf die Arbeitsebene 400 aufgetragen. Die Schritte werden so oft wiederholt, bis das Objekt 2 fertiggestellt ist. Das Pulver 3 kann ein Kunststoff-Pulver, ein Metallpulver, beschichteter Sand, ein Keramik-Pulver, Mischungen davon oder auch eine pastöse Pulverzubereitung jedweder Pulver sein.

Das Pulver 3, das bereits einen oder mehrere Herstellungsprozesse durchlaufen hat, jedoch nicht verfestigt wurde, wird Altpulver 4 genannt und weist durch diesen Prozess und den damit einhergehenden Wärmeeintrag veränderte Werkstoffeigenschaften auf.

Das erfindungsgemäße Verfahren erfasst bei jedem Herstellungsprozess, in dem das Objekt 2 hergestellt wird, die Pulverzusammensetzung und somit auch die Eigenschaften, die sich aus dieser Information ableiten lassen. Diese Informationen über die Pulverzusammensetzung und die Eigenschaften der Pulvermischung werden beim nächsten Bauvorgang für die Kalibrierung der Bauparameter und für die eventuelle Zertifizierung (Quality Management System - QMS) der Bauteile berücksichtigt.

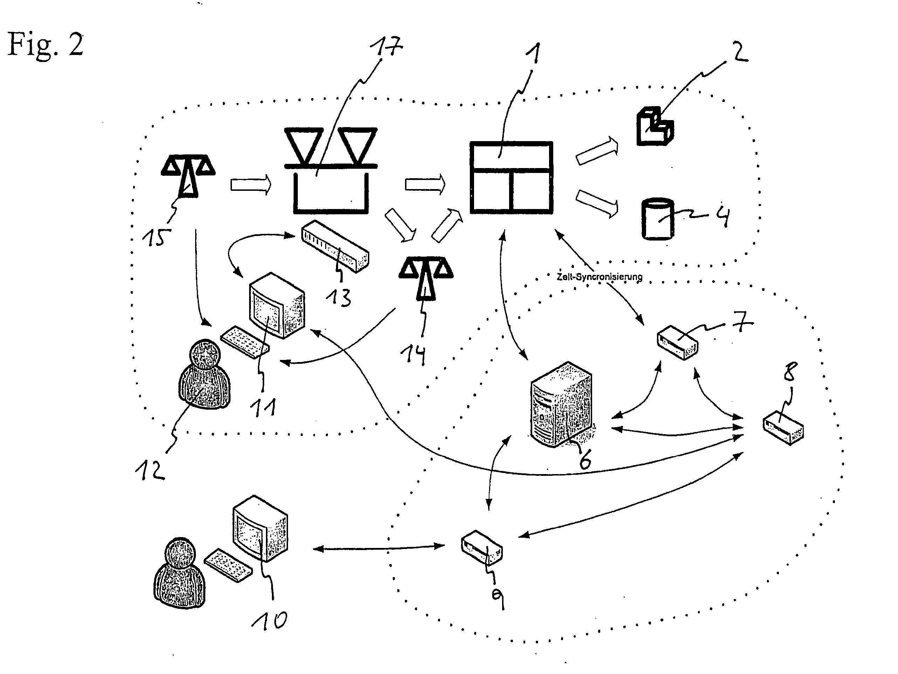

Fig. 2 zeigt eine schematische Ansicht des Systems zur Bereitstellung einer Materialmenge bzw. eine Pulvermenge zur Durchführung des erfindungsgemäßen Verfahrens. Alle Prozessdaten werden auf einer zentralen Pulver-Datenbank 6 verwaltet. Die zentrale Pulver-Datenbank 6 tauscht sowohl mit der Lasersintervorrichtung 1 als auch mit einem Wächter bzw. Zeitserver 7 Informationen aus. Der Zeitserver 7 verwaltet die zeitliche Abfolge der Herstellungsprozesse. Dies ist beispielsweise von Wichtigkeit, wenn mehr als eine Lasersintervorrichtung 1 zum Einsatz kommt. Der Zeitserver 7 tauscht wiederum Informationen mit einer Pulvertracking-Datenbank 8 aus.

Die Pulvertracking-Datenbank 8 dokumentiert und überwacht die verwendeten Pulver 3, also die verwendeten Altpulver 4, sowie dem System zugeführte Neupulver 5, die noch keinen Herstellungsprozess durchlaufen haben. Auf diese Art wird sichergestellt, dass genau bestimmt werden kann, welche Pulverzusammensetzung die erzeugten Objekte 2 aufweisen. Die Pulvertracking-Datenbank 8 ist sowohl mit der zentralen Pulver-Datenbank 6, als auch mit einem Terminal 11, das entweder von einem Bediener 12 bedient wird oder über eine Software gesteuert ist, verbunden. Das Terminal 11 überwacht den Einsatz von Altpulver 4 sowie von Neupulver 5. Am Terminal 11 können nicht automatisch über die Pulver-Datenbank 6 vergebene Daten durch den Bediener 12 eingegeben werde, z.B. dem System entnommene oder zugegebene Pulvermengen und deren Merkmale. Über eine erste Waage 14 gewogene, entnommene Pulver 3 bekommen eine Identifikation, z.B. einen RFID-Chip, ein Etikett mit einem Barcode oder eine andersgeartete Markierung. In ähnlicher Weise kann über eine Waage Pulver 3 in das System eingebracht werden.

Die einzelnen Mengen der Altpulverchargen werden durch die Lasersintervorrichtung 1 verbaut. Zuvor kann das Altpulver 4 jedoch mit Neupulver 5 in einem Mischer 17 vermischt werden. Durch die Auswahl des Mischverhältnisses können bereits in diesem frühen Stadium Werkstoffeigenschaften wie Zugfestigkeit, Elastizitätsmodul, Wärmeleitfähigkeit, etc. des späteren fertig hergestellten Bauteils definiert werden. Eine aufwändige Einzelanalyse zum Feststellen der Eigenschaften, ist somit bei diesem Prozessschritt überflüssig. Durch das bekannte Mischungsverhältnis ist es weiterhin möglich, die Parameter der Lasersintervorrichtung 1 z.B. bzgl. der Schmelztemperatur des verwendeten Pulvers 3 optimal einzustellen.

Wenn Neupulver 5 in den Mischer 17 gefüllt wird, sorgt der Bediener 12 bzw. die RFID 13 dafür, dass die Informationen über die Menge, die Charge, etc. auf das Terminal 11 übertragen werden, das die Informationen auf die Pulvertracking-Datenbank 8 übergibt, die die Informationen wiederum an die Pulver-Datenbank 6 weiterleitet.

Das Neupulver 5 wird, bevor es mit dem Altpulver 4 vermischt wird, mittels einer zweiten Waage 15 gewogen. Die verwendeten Altpulver- und Neupulvermengen werden zentral auf der Pulver-Datenbank 6 abgespeichert. Ebenso wird das Mischungsverhältnis von Alt- und Neupulver dort abgelegt. Auf diese Weise ist dem System zu jedem Zeitpunkt bekannt, welche Pulver 3 gerade wo, wann und in welcher Zusammensetzung verbaut werden. Jedes erzeugte Objekt 2 ist somit bzgl. seiner Zusammensetzung exakt bestimmbar. Hierfür kann ein Qualitätssiegel (QMS) vom Hersteller vergeben werden. Die Bestimmung der Pulver-Umlaufmengen erfolgt beispielsweise über die Analyse der hergestellten Objekte 2, die Parameter der eingesetzten Dosiereinrichtungen zum Zuführen von Pulver 3, den Flächenfaktor der jeweiligen Bauvorgänge, die Bauhöhe, das Mischverhältnis der Pulver 3 und die gewogene Menge des Neupulvers 5.

Über eine Schnittstelle 9 bzw. eine IQMS (Integrated Quality Management System)-Informationszentrale 10 ist es möglich, das System intern oder extern zu überprüfen bzw. zu warten. Es ist möglich, mit Hilfe des IQMS, Fehler während dem Herstellungsprozess festzustellen und zu dokumentieren. Objekte 2 bei denen während dem Herstellungsprozess Unregelmäßigkeiten bzw. Fehler detektiert wurden, werden anschließend kontrolliert. Auf diese Weise kann eine hohe Qualität (z.B. Oberflächenqualität) der hergestellten Teile gewährleistet und dokumentiert werden. Auch eine Überwachung des Laser-Verhaltens, des Scanner-Betriebs und der Temperaturverteilungen sind realisierbar. Die gesammelten Daten werden zur weiteren Optimierung der Prozesse und für die Vergabe von Qualitätssiegeln durch den Hersteller verwendet. Darüber hinaus sind die Herstellungsprozesse und somit die erzeugten Bauteile reproduzierbar.

Es können weiterhin externe Komponenten vorgesehen werden, die mit dem System kommunizieren.

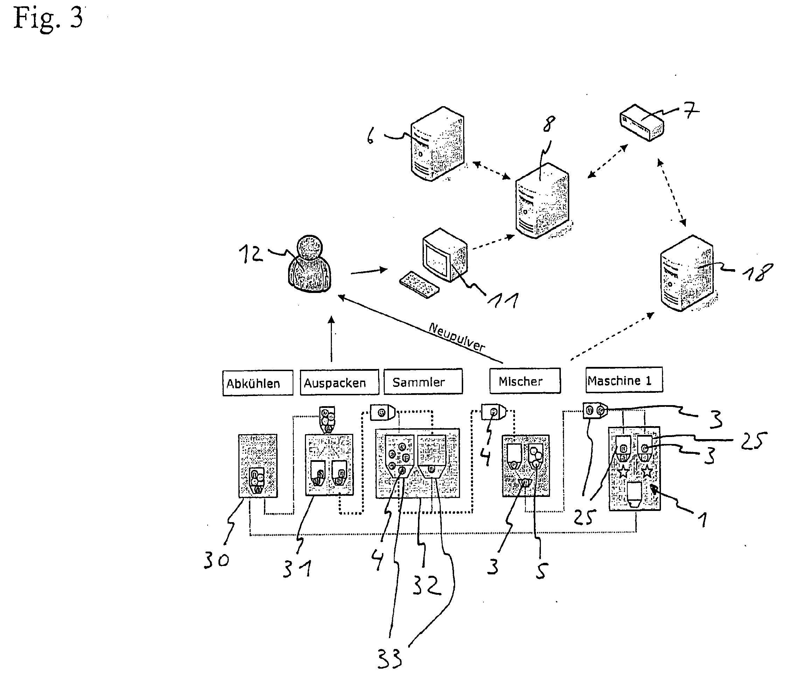

Fig. 3 zeigt das Verfahren beispielhaft mit den verschiedenen Verfahrensschritten "Abkühlen", "Auspacken", "Sammeln", "Mischen", "Herstellen" (Lasersintervorrichtung 1) in einer ersten Ausführungsform.

Zunächst stellt die Lasersintervorrichtung 1 in einem Herstellungsprozess (Job) ein Objekt 2 oder mehrere Objekte 2 gleichzeitig her. Diese Information wird in der Job-Datenbank 18 eingetragen und dann vom Zeitserver 7 abgerufen. Der Zeitserver 7 informiert danach die Pulvertracking-Datenbank 8. Währenddessen wird das Pulver 3 in dafür vorgesehene Pulverbehälter 25 der Lasersintervorrichtung 1 nachgefüllt. Im Mischer 17 wird durch Vermischung von Altpulver 4 und/oder Neupulver 5 neues Pulver 3 erzeugt. Die Pulver-Datenbank 6, die den quantitativen und den qualitativen Pulververlauf im System abbildet, wird informiert, wie viel neues Pulver entstanden ist, und die Pulvertracking-Datenbank 8 bekommt die Information, welche ID das entstandene Pulver zugeteilt bekommen hat.

Falls die Pulverbehälter 25 und/oder Pulver-Förderstrecken leer sind, werden diese gesteuert durch die Pulvertracking-Datenbank 8 und unterstützt durch den Bediener 12 bzw. die RFIDs 13 wieder aufgefüllt.

Es ist möglich, das Objekt 2 bzw. die verschiedenen Objekte 2, die in einem Herstellungsprozess erzeugt werden, mit verschiedenen Pulvern 3 zu bilden. Es ist auch möglich, jede einzelne Schicht mit einem anderen Pulver 3 aufzubauen. Sobald bei einem Herstellungsprozess ein neues Pulver 3 bzw. eine von der zuvor verwendeten Pulvermischung verschiedene Pulvermischung zugeführt wird, über das System dokumentiert, in welcher Schicht des Objekts 2 bzw. der Objekte 2, also in welcher Bauhöhe, sich das Pulver 3 geändert hat. Durch die Mengenerfassung des Pulverflusses über die Pulverdosiereinrichtungen in die Lasersintervorrichtung 1 erkennt das System automatisch, wann sich ein Pulvermerkmal ändert.

Sobald der Herstellungsprozess abgeschlossen ist, wird diese Information an die Job-Datenbank 18 übermittelt und wird anschließend durch den Zeitserver 7 ausgelesen. Der Zeitserver 7 informiert wiederum die Puvertracking-Datenbank 8, so dass das verbaute Neupulver 5 nun verrechnet werden kann. Diese Verrechnung kann beispielsweise derart erfolgen, dass der Hersteller der Objekte 2 ein Neupulver-Kontingent beim Pulverhersteller kauft und dafür eine gewisse Anzahl an Pulver-Einheiten erhält, z.B. kg-Einheiten, die dann während den verschiedenen Herstellungsprozessen verbraucht werden. Auf diese Art wird gewährleistet, dass lediglich Pulver verwendet wird, das auf die jeweilige Lasersintervorrichtung 1 abgestimmt ist.

Durch die Beendigung eines Herstellungsprozesses werden neue Identifikationsnummern (IDs) für das nicht verbaute Altpulver 4 und die hergestellten Objekte 2 erzeugt. Einer bestimmten Pulvermenge wird also somit eine ID zugeordnet, über die der Verarbeitungsgang der Pulvermenge nachvollziehbar ist. Die Pulvertracking-Datenbank 8 informiert die Pulver-Datenbank 6 über die veränderten Pulvermengen im System. Das für das erzeugte Objekt 2 verbrauchte Pulver 3 verlässt als Output das System. Das erzeugte Objekt 2 wird zum Abkühlen aus dem Baubehälter 100 (siehe Fig. 1) entnommen und in die Abkühlstation 30 transportiert. Sobald das Objekt 2 abgekühlt ist, wird es weiter zur Auspackstation 31 befördert. Beim Auspacken entstehen aus den mehreren erzeugten IDs nun jeweils eine ID für das Objekt 2 und das Altpulver 4.

Es ist ein Sammler 32 vorgesehen, der zwei Altpulversammelbehältern 33 aufweist. Sobald einer der Altpulversammelbehälter 33 voll ist, wird dieser durchmischt. Um eine konstante Mischung zu erreichen, wird das Altpulver 4 in den anderen Altpulversammelbehälter 33 transportiert und dort gesammelt. Somit wird der Mischer 17 nur mit dem analysierten Altpulver 4 gespeist. Es ist z.B. auch denkbar, dass gewisse Pulver 3 eingelagert werden, um sie dann bei Bedarf zu verbauen. Dies sichert die Möglichkeit der exakten Reproduktion gewisser Bauteile bzw. Objekte 2.

Da nach mehreren Herstellungsprozessen (Jobs) eine Mehrzahl von Mischungen entstehen kann, ist es vorteilhaft, das Altpulver 4 aus verschiedenen Jobs zu sammeln, dieses dann zu durchmischen und erst dann wieder mit Neupulver zu vermischen. Ein Vorteil ist es, dass die Mischungen auf diese Weise vergleichbar bleiben und so eine stabile Pulverqualität gewährleistet werden kann.

Es ist auch denkbar, das Verfahren ohne den Sammler 32 durchzuführen.

Anschließend wird das Altpulver 4 in den Mischer 17 befördert und dort gegebenenfalls mit Neupulver 5 vermischt.

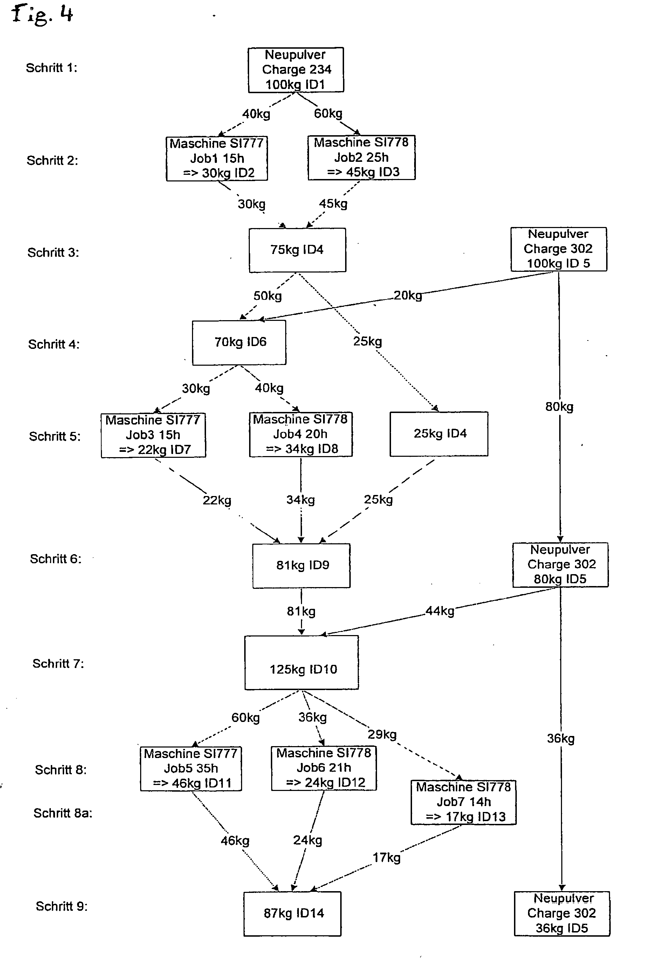

Fig. 4 zeigt ein Beispiel eines Materialfluss-Diagramms mit neun Schritten, die im folgenden erläutert werden.

Der Prozess beginnt mit der Bereitstellung einer Charge Neupulver. Ein Teil des Neupulvers 5 dieser Charge wird für einen Bauvorgang oder mehrere Bauvorgänge auf einer oder mehreren Lasersintermaschine(n) 1 verwendet. Das Neupulver 5 wird zuvor mit einer Identifikationsnummer (ID) gekennzeichnet und wird quantitativ (kg-Angabe) in das System eingepflegt. Das nicht während dem Herstellungsprozess oder den Herstellungsprozessen verfestigte Altpulver 4 wird in einem späteren Herstellungsprozess wieder verwendet. Die Herstellungsdauer wird ebenfalls durch das System erfasst. Die Altpulver 4 aus mehreren Herstellungsprozessen werden miteinander zu einer neuen Pulvermischung vermischt. Diese neue Pulvermischung erhält eine neue ID, die ebenfalls durch das System erfasst wird. Die Zusammensetzung der Pulvermischung ist dem System anteilsmäßig bekannt.

In weiteren Prozessschritten kann den erzeugten Altpulvermischungen weiteres Neupulver 5 hinzugefügt werden. Diese Information wird beispielsweise durch die Eingabe der Neupulvermenge am Terminal 11 (siehe Fig. 2) ebenfalls durch das System erfasst. Jede neue Pulvermischung erhält eine eigene ID.

Die mengenmäßige Differenz des Pulvers 3, beispielsweise von Schritt 1 nach 2 (100kg Input - 75kg Output) setzt sich aus verbautem Pulver 3, also dem Objekt 2 und aus Verlustpulver aufgrund von Reinigungs- bzw. Wiederaufbereitungsvorgängen zusammen.

Bei Schritt 9 werden beispielsweise die Pulver ID11 (46kg), ID12 (24kg) und ID13 (17kg) aus den Maschinen vermischt. Dabei entstehen 87kg Pulver 3 mit ID14. Dieses Pulver 3 ID14 weist Anteile der Charge 234 und der Charge 302 auf. Der Anteil der Charge 234 hat bereits drei Herstellungsprozesse und der Anteil der Charge 302 hat bereits zwei bzw. einen Herstellungsprozess(e) durchlaufen. Das bedeutet, dass sich in dem Pulver 3 ID14 sowohl ein Altpulver-Anteil "der ersten Ordnung" der Charge 302 (einmalige Verwendung) als auch ein Altpulver-Anteil "der zweiten Ordnung" der Charge 302 (zweimalige Verwendung) befindet.

Der Herstellungsprozess kann auf diese Weise beliebig fortgeführt werden. Es können z.B. auch zusätzlich zu den beschriebenen Lasersintervorrichtungen 1 weitere Lasersintervorrichtungen 1 hinzugefügt werden.

Als minimale Information für den Materialfluss wird eine Identifikation (z.B. eine Identifikationsnummer) und das Gewicht der betreffenden Pulvermenge benötigt. Zusätzliche Informationen wie Zeitstempel, also der Zeitpunkt der Herstellung bzw. Vermischung, Maschinen-Nr., Jobinformationen, Verweilzeiten des Pulvers 3 in der Maschine, Charge und Informationen wie herrschende Temperaturen, Materialdaten, etc., können bei Bedarf ergänzt werden. Durch diese Materialflussdiagramme kann aus jedem Schritt die Materialzusammensetzung und die Alterung verfolgt werden. So kann z.B. das Material aus Job5 auf der Maschine SI777 bis zur ersten Mischung zurückverfolgt werden. Es dadurch möglich, die Pulverzusammensetzung von hergestellten Objekten 2 zu ermitteln. Spezielle Ausführungen des Materialflusses unter der Verwendung von Zeitstempeln ermöglichen auch einen oder mehrere Pulver ID Wechsel während eines Jobs auf einer Lasersintermaschine 1.

Das erfindungsgemäße Verfahren ist weiterhin nicht auf die Anwendung bei einer Lasersintermaschine beschränkt. Vielmehr ist das Verfahren auf sämtliche schichtaufbauenden Verfahren anwendbar, insbesondere auf solche, bei denen Pulver-Materialien verwendet werden.

## Patentansprüche

1. Selektives Lasersinterverfahren zur Herstellung eines dreidimensionalen Objekts (2) bei dem ein Objekt durch selektives Verfestigen von Schichten eines Pulvers (3, 4, 5) an den dem Querschnitt des Objekts (2) in der jeweiligen Schicht entsprechenden Stellen gebildet wird, mit den folgenden Schritten:
Bereitstellen von mindestens einer ersten Pulvermenge, die durch wenigstens ein Merkmal gekennzeichnet ist,
Erfassen von Daten, die sich auf das wenigstens eine Merkmal der ersten Pulvermenge beziehen, und
Speichern der Daten, die sich auf das wenigstens eine Merkmal der ersten Pulvermenge beziehen, wobei der Pulvermenge eine Identifikation (ID) zugeordnet wird, über die der Verarbeitungsgang der Pulvermenge nachvollziehbar ist;
Bereitstellen von mindestens einer zweiten Pulvermenge, die wenigstens einen Teil der ersten Pulvermenge enthält und die durch wenigstens das eine Merkmal gekennzeichnet ist,
wobei das Bereitstellen der zweiten Pulvermenge durch Mischen von Altpulver (4) mit der ersten Pulvermenge erfolgt, wobei die erste Pulvermenge Neupulver (5) ist,
wobei Altpulver, (4) ein Pulver ist, das bereits einen oder mehrere Herstellungsprozesse durchlaufen hat, jedoch nicht verfestigt wurde, und wobei das Neupulver (5) ein Pulver ist, das noch keinen Herstellungsprozess durchlaufen hat;
Speichern der Daten, die sich auf das wenigstens eine Merkmal der zweiten Pulvermenge beziehen,
wobei das eine Merkmal die Zusammensetzung des Pulvers (3), das Alter des Pulvers (3, 4, 5) oder die Menge des Pulvers (3, 4, 5) ist.
wobei das Altpulver (4) aus verschiedenen Herstellungsprozessen gesammelt und durchmischt wird, bevor es mit Neupulver (5) vermischt wird; und
wobei durch die Beendigung eines Herstellungsprozesses neue Identifikationen (ID) für das nicht verbaute Altpulver (4) erzeugt werden.

2. Verfahren nach Anspruch 1, **dadurch gekennzeichnet, dass** der Pulverfluss des Pulvers (3) bei der Herstellung von einem oder mehreren Objekten (2) dokumentiert und/oder geregelt wird.

3. Verfahren nach Anspruch 2, **dadurch gekennzeichnet, dass** der Eingang und der Ausgang dokumentiert und/oder geregelt wird, wobei zugeführtes Pulver (3) den Eingang und das erzeugte Objekt (2) und Altpulver (4) den Ausgang bilden.

4. Verfahren nach einem der Ansprüche 1 bis 3, **dadurch gekennzeichnet, dass** das Pulver (3) ein Polymer-Pulver und/oder ein Metall-Pulver und/oder ein Keramik-Pulver ist.

5. Verfahren nach einem der Ansprüche 1 bis 4, **dadurch gekennzeichnet, dass** das Merkmal über die Identifikation (ID) der Pulvermenge zugeordnet wird.

6. Verfahren nach einem der Ansprüche 1 bis 5, **dadurch gekennzeichnet, dass** bei der Bereitstellung einer weiteren Pulvermenge die Daten von Pulvermengen, aus denen diese zusammengesetzt ist, abgespeichert werden.

7. Verfahren nach einem der Ansprüche 1 bis 6, **dadurch gekennzeichnet, dass** das Altpulver (4) durch einen RFID-Chip (13) gekennzeichnet wird.

## Claims

1. Method of selective laser sintering for producing a three-dimensional object (2) in which an object is formed by selectively solidifying layers of a powder (3, 4, 5) at the locations corresponding to the cross section of the object (2) in the respective layer, comprising the following steps:
providing at least a first amount of powder, which is **characterized by** at least one feature,
detecting data, which relate to the at least one feature of the first amount of powder, and
storing data, which relate to the at least one feature of the first amount of powder,
the amount of powder being assigned an identification (ID), by which the handling sequence of the amount of powder is reproducible;
providing at least a second amount of powder, which contains at least part of the first amount of powder and is **characterized by** at least the one feature,
the second amount of powder being provided by mixing waste powder (4) with the first amount of powder, the first amount of powder being fresh powder (5),
waste powder (4) being a powder that has already been subjected to one or more production processes, but has not been solidified, and the fresh powder (5) being a powder that has not yet been subjected to a production process;
storing the data that relate to the at least one feature of the second amount of powder,
the one feature being the composition of the powder (3), the age of the powder (3, 4, 5) or the amount of the powder (3, 4, 5),
the waste powder (4) being collected from various production processes and thoroughly mixed before it is mixed with the fresh powder (5); and
the ending of a production process having the effect of producing new identifications (IDs) for the waste powder (4) that has not been incorporated.

2. Method according to Claim 1, **characterized in that** the powder flow of the powder (3) is documented and/or controlled by a feedback control during the production of one or more objects (2).

3. Method according to Claim 2, **characterized in that** the input and the output are documented and/or controlled by a feedback control, wherein the input is formed by supplied powder (3) and the output is formed by the generated object (2) and waste powder (4).

4. Method according to one of Claims 1 to 3, **characterized in that** the powder (3) is a polymer powder and/or a metal powder and/or a ceramic powder.

5. Method according to one of Claims 1 to 4, **characterized in that** the feature is assigned to the amount of powder by the identification (ID).

6. Method according to one of Claims 1 to 5, **characterized in that**, when providing a further amount of powder, the data of amounts of powder of which it is composed are stored.

7. Method according to one of Claims 1 to 6, **characterized in that** the waste powder (4) is identified by an RFID chip (13).

## Revendications

1. Procédé de frittage laser sélectif pour la fabrication d'un objet tridimensionnel (2), dans lequel un objet est formé par consolidation sélective de couches d'une poudre (3, 4, 5) dans les zones correspondant à la section transversale de l'objet (2) dans la couche respective, comportant les étapes suivantes :
disposition d'au moins une première quantité de poudre, qui est **caractérisée par** au moins un caractère distinctif,
collecte de données qui se rapportent audit au moins un caractère distinctif de la première quantité de poudre, et
enregistrement des données qui se rapportent audit au moins un caractère distinctif de la première quantité de poudre, à la quantité de poudre étant assignée une identification (ID) permettant de suivre la passe de mise en oeuvre de la quantité de poudre ;
disposition d'au moins une deuxième quantité de poudre, qui contient au moins une partie de la première quantité de poudre et qui est **caractérisée par** au moins ledit un caractère distinctif,
la disposition de la deuxième quantité de poudre s'effectuant par mélange de poudre ancienne (4) avec la première quantité de poudre, la première quantité de poudre étant une poudre neuve (5),
la poudre ancienne (4) étant une poudre qui est déjà passée par un ou plusieurs processus de fabrication, mais n'a pas été consolidée, et la poudre neuve (5) étant une poudre qui n'est pas encore passée par un processus de fabrication.
enregistrement des données qui se rapportent audit au moins un caractère distinctif de la deuxième quantité de poudre,
ledit un caractère distinctif étant la composition de la poudre (3), l'âge de la poudre (3, 4, 5) ou la quantité de la poudre (3, 4, 5),
la poudre ancienne (4) étant rassemblée à partir de divers processus de fabrication et homogénéisée, avant d'être mélangée avec la poudre neuve (5) ; et
de nouvelles identifications (ID) pour l'ancienne poudre (4) non mise en oeuvre dans la construction étant engendrées lors de la terminaison d'un processus de fabrication.

2. Procédé selon la revendication 1, **caractérisé en ce que** le flux de la poudre (3) dans la fabrication d'un ou de plusieurs objets (2) est documenté et/ou réglé.

3. Procédé selon la revendication 2, **caractérisé en ce que** l'entrée et la sortie sont documentées et/ou réglées, la poudre (3) introduite constituant l'entrée et l'objet (2) produit et la poudre ancienne (4) constituant la sortie.

4. Procédé selon l'une quelconque des revendications 1 à 3, **caractérisé en ce que** la poudre (3) est une poudre de polymère et/ou une poudre de métal et/ou une poudre de céramique.

5. Procédé selon l'une quelconque des revendications 1 à 4, **caractérisé en ce que** le caractère distinctif est assigné via l'identification (ID) de la quantité de poudre.

6. Procédé selon l'une quelconque des revendications 1 à 5, **caractérisé en ce que** lors de la disposition d'une nouvelle quantité de poudre les données des quantités de poudre qui la composent sont enregistrées.

7. Procédé selon l'une quelconque des revendications 1 à 6, **caractérisé en ce que** la poudre ancienne (4) est **caractérisée par** une puce RFID (13).
